# EUROPEAN PATENT APPLICATION

(11) **EP 4 369 634 A1**
(43) Date of publication of application: **15.05.2024**
(21) Application number: 22848263.4
(22) Date of filing: 12.07.2022
(51) Int. Cl.: H04B 10/038

(54) **OPTICAL CROSS-CONNECT DEVICE AND COMMUNICATION METHOD**

(30) Priority: 28.07.2021 CN 202110859654
(71) Applicant: Huawei Technologies Co., Ltd., Longgang Shenzhen, Guangdong 518129 (CN)
(72) Inventor: QI, Bin, Shenzhen, Guangdong 518129 (CN); KONG, Fanhua, Shenzhen, Guangdong 518129 (CN); HUANG, Jianmin, Shenzhen, Guangdong 518129 (CN)
(74) Representative: Grünecker Patent- und Rechtsanwälte PartG mbB
(86) International application number: PCT/CN2022/105155
(87) International publication number: WO 2023/005658

(57) **Abstract**

This application provides an optical cross-connect OXC device, a communication method, and a communication system. In the OXC device provided in this application, if a first path is faulty, path switching may be directly implemented between working boards in the OXC device, and a backup board does not need to be installed. This reduces production costs of the OXC device. In addition, a working board may be installed in a slot that is occupied by the backup board and that is in the OXC device. This further improves service processing efficiency of the OXC device.

## Description

This application claims priority to Chinese Patent Application No. 202110859654.X, filed with the China National Intellectual Property Administration on July 28, 2021 and entitled "OPTICAL CROSS-CONNECT DEVICE AND COMMUNICATION METHOD", which is incorporated herein by reference in its entirety.

### TECHNICAL FIELD

Embodiments of this application relate to the communication field, and in particular, to an optical cross-connect device and a communication method.

### BACKGROUND

Optical cross-connect (optical cross-connect, OXC) is a new centralized optical cross-connect device launched in recent years. The OXC may implement large-dimension service cross-connection in an optical cross-connection manner. This effectively shortens a transmission delay of a service optical signal and improves service processing efficiency.

An OXC device includes a plurality of slots, OXC boards having a same feature or different features are inserted into the plurality of slots, and optical signal interaction may be implemented between different slots via an optical connection device. A slot and the optical connection device may be connected via a high-density optical connector. The optical connector is a multi-core multi-channel optical connector, and may include a plurality of optical fibers. Optical signals are sensitive to dirt and bending when being transmitted in an optical fiber. It is assumed that, after falling into a fiber core area, dust causes losses of optical signals transmitted in a fiber core. In addition, optical signals accumulated on the dust accumulate and generate heat seriously. In this case, the dust burns on an end face of the optical fiber. Consequently, the fiber core is permanently invalid, and transmission of a service optical signal in an optical path of the fiber core is affected. To ensure that the service optical signal in the optical path can be normally transmitted, a backup slot may be reserved in the OXC device, and a backup board is inserted into the backup slot. It is assumed that a service optical signal is transmitted from a board A to a board B, and then is output by the board B to another component. If an optical path from A to B is faulty, the service optical signal output by the board A is transmitted to a backup board C, and then the board C outputs the service optical signal to another component. Service protection is implemented by replacing the board B with the board C.

In a conventional OXC device, a large quantity of backup boards occupy service slots. Consequently, service processing efficiency of the OXC device is low. In addition, a backup board is the same as a working board, and the large quantity of backup boards increase production costs of the OXC device.

### SUMMARY

This application provides an optical cross-connect OXC device and a communication method, to reduce production costs of the OXC device and improve working efficiency of the OXC device.

According to a first aspect, this application provides an optical cross-connect device. The optical cross-connect device includes a plurality of input modules, a plurality of output modules, and an optical switching module. A target input module is configured to: if a first path is faulty, switch, to a second path for transmission, a service optical signal to be transmitted from the first path. The first path is an optical transmission path between the target input module and a target output module. The second path is an optical transmission path among the target input module, the optical switching module, and the target output module. The plurality of input modules include the target input module. The plurality of output modules include the target output module. The optical switching module is configured to control the service optical signal that is input from the target input module to be transmitted to the target output module through the second path. The target output module is configured to output the service optical signal.

In the OXC device provided in this application, if the first path is faulty, the target input module may switch, to the second path for transmission, the service optical signal to be transmitted from the first path. The OXC device further includes the optical switching module. The optical switching module may control the service optical signal that is input from the target input module to be transmitted to the target output module through the second path. Both the first path and the second path are optical transmission paths between the target input module and the target output module. Therefore, if the first path is faulty, path switching may be directly implemented between working boards in the OXC device, and a backup board does not need to be installed. This reduces production costs of the OXC device. In addition, a working board may be installed in a slot that is occupied by the backup board and that is in the OXC device. This further improves service processing efficiency of the OXC device.

In a possible implementation of the first aspect, the optical switching module includes a plurality of input ports and a plurality of output ports. Each input port is connected to at least one input module. Each output port is connected to at least one output module. A target input port of the optical switching module is connected to the target input module. A target output port of the optical switching module is connected to the target output module. The optical switching module is configured to control the service optical signal received by the target input port to be transmitted to the target output module through the target output port. The second path is an optical transmission path among the target input module, the target input port, the target output port, and the target output module.

In this possible implementation, there are a plurality of connection manners when the input port and the output port of the optical switching module are respectively connected to the input module and the output module.

Optionally, the optical switching module may be connected to the input module and the output module in a one-to-one connection manner. To be specific, one input port is connected to only one input module, and one output port is connected to only one output module. In this possible implementation, 1:N protection may be implemented for each input module. To be specific, there is one protection path (the second path) between each input module and N output modules. The optical switching module may open a protection path between each input module and the N output modules based on a requirement. The one-to-one connection manner has a simple structure, a small link insertion loss, and is easy to implement.

Optionally, the optical switching module may be connected to the input module and the output module in a one-to-many connection manner. To be specific, one input port is connected to a plurality of input modules, and one output port is connected to a plurality of output modules. This possible implementation has a feature of time-sharing protection. To be specific, only one protection path can work at a same moment when the input module (or the output module) is connected to one input port (or one output port). The optical switching module in the one-to-many connection manner may be used to reduce a quantity of input ports and a quantity of output ports in the optical switching module, reduce complexity of the optical switching module, and reduce costs of the optical switching module.

Optionally, the optical switching module may be connected to the input module and the output module in a many-to-one connection manner. To be specific, a plurality of input ports are connected to one input module, and a plurality of output ports are connected to one output module. In this possible implementation, there may be a plurality of protection paths between each input module and each output module, and N:M protection may be implemented. N represents a total quantity of working paths (first paths) between each input module and each output module, and M represents a total quantity of protection paths (second paths) between the input module and the output module. This further improves reliability of the OXC device.

In a possible implementation of the first aspect, the target input module includes a first wavelength selective switch (wavelength selective switch, WSS), and the first WSS includes a first output interface and a second output interface. The first output interface is connected to the target output module, and the second output interface is connected to the target input port. The first WSS is configured to: if the first path is faulty, switch, to the second output interface for output, the service optical signal to be output from the first output interface. The first path is an optical transmission path between the first output interface and the target output module, and the second path is an optical transmission path among the second output interface, the target input port, the target output port, and the target output module.

In this possible implementation, the target input module includes the WSS. The first output interface of the WSS is connected to the target output module, and the second output interface of the WSS is connected to the target input port of the optical switching module. The target output port of the optical switching module is connected to the target output module. If a working path (the first path) between the first output interface of the WSS and the target output module is faulty, the target input module switches an output interface via the WSS, and the WSS inputs the service optical signal to the target input port through the second output interface. The optical switching module controls the service optical signal to be transmitted to the target output module through the target output port. In this possible implementation, when scheduling the service optical signal, the WSS may specify and allocate different transmission paths to optical waves of different wavelengths in the service optical signal. This improves accuracy of scheduling the service optical signal by the target output module.

In a possible implementation of the first aspect, the optical switching module includes an optical switch. The optical switch is configured to set the target input port and the target output port to be closed, to control the service optical signal to be transmitted to the target output module through the target output port.

In this possible implementation, it is assumed that the target input module is connected to a target input port of the optical switch, and the target output port is connected to the target output module. If the working path (the first path) between the target input module and the target output module is faulty, the target input module inputs the service optical signal to the target input port. The optical switch controls the service optical signal to be output to the target output module through the target output port by setting the target input port and the target output port to be closed. It may be understood that, if the service optical signal needs to be transmitted to another output module, the optical switch may control a switch between the target input port and another output port to be closed, to schedule the service optical signal. Implementation of the optical switching module by using the optical switch has many advantages. For example, a size of the optical switch is small, so that space that is occupied by the optical switching module and that is in the OXC device is reduced. In addition, an insertion loss generated when an optical signal is transmitted in the optical switch is small, and a failure rate is low. This improves reliability of the OXC device.

In a possible implementation of the first aspect, the optical switching module includes a second WSS, and the second WSS is configured to adjust a rotation angle of a liquid crystal on silicon, to control the service optical signal to be transmitted to the target output module through the target output port.

In this possible implementation, it is assumed that the target input module is connected to a target input port of the WSS, and the target output port is connected to the target output module. If the working path (the first path) between the target input module and the target output module is faulty, the target input module inputs the service optical signal to the target input port, and the service optical signal is transmitted to the liquid crystal on silicon after passing through a prism group and a grating. The WSS schedules the service optical signal to the target output port by adjusting the angle of the liquid crystal on silicon, and the target output port transmits the service optical signal to the target output module. Implementation of the optical switching module by using the WSS has many advantages. Wavelength-level scheduling between the plurality of input ports and the plurality of output ports may be implemented via a multi-port WSS, and different transmission paths may be specified and allocated to optical waves of different wavelengths in the service optical signal. This improves accuracy of scheduling the service optical signal by the optical switching module.

In a possible implementation of the first aspect, the optical switching module includes an optical splitter. The optical splitter is configured to adjust an optical splitting ratio and an optical splitting direction of the service optical signal, to control the service optical signal to be transmitted to the target output module through the target output port.

In a possible implementation of the first aspect, the optical switching module includes an arrayed waveguide grating (arrayed waveguide grating, AWG), and the AWG is configured to adjust an optical path of the AWG, to control the service optical signal to be transmitted to the target output module through the target output port.

In a possible implementation of the first aspect, the optical switching module includes a micro-electro-mechanical system (micro-electro-mechanical system, MEMS). The MEMS is configured to adjust an angle of a micromirror in the MEMS, to control the service optical signal to be transmitted to the target output module through the target output port.

In this possible implementation, it is assumed that the target input module is connected to a target input port of the MEMS, and the target output port is connected to the target output module. If the working path (the first path) between the target input module and the target output module is faulty, the target input module inputs the service optical signal to the target input port. The MEMS rotates the angle of the MEMS micromirror through electrical control, to schedule the service optical signal to the target output port, and the target output port transmits the service optical signal to the target output module. Implementation of the optical switching module by using the MEMS has many advantages. An MEMS technology is mature. When there are a large quantity of ports, the MEMS can implement accurate gating between the large quantity of ports. This improves a capability of the optical switching module to schedule the service optical signal.

According to a second aspect, this application provides a communication method, applied to an optical cross-connect device. The optical cross-connect device includes a plurality of input modules, a plurality of output modules, and an optical switching module. The method includes: switching, via a target input module to a second path for transmission, a service optical signal to be transmitted from the first path if a first path is faulty, where the first path is an optical transmission path between the target input module and a target output module, the second path is an optical transmission path among the target input module, the optical switching module, and the target output module, the plurality of input modules include the target input module, and the plurality of output modules include the target output module; controlling, via the optical switching module, the service optical signal that is input from the target input module to be transmitted to the target output module through the second path; and outputting the service optical signal via the target output module.

In the communication method provided in this application, if the first path is faulty, the target input module may switch, to the second path for transmission, the service optical signal to be transmitted from the first path. The OXC device further includes the optical switching module. The optical switching module may control the service optical signal that is input from the target input module to be transmitted to the target output module through the second path. Both the first path and the second path are optical transmission paths between the target input module and the target output module. Therefore, if the first path is faulty, path switching may be directly implemented between working boards in the OXC device, and a backup board does not need to be installed. This reduces production costs of the OXC device. In addition, a working board may be installed in a slot that is occupied by the backup board and that is in the OXC device. This further improves service processing efficiency of the OXC device.

In a possible implementation of the second aspect, the optical switching module includes a plurality of input ports and a plurality of output ports. Each input port is connected to at least one input module. Each output port is connected to at least one output module. A target input port of the optical switching module is connected to the target input module. A target output port of the optical switching module is connected to the target output module. The controlling, via the optical switching module, the service optical signal that is input from the target input module to be transmitted to the target output module through the second path includes: controlling, via the optical switching module, the service optical signal received by the target input port to be transmitted to the target output module through the target output port. The second path is an optical transmission path among the target input module, the target input port, the target output port, and the target output module.

In this possible implementation, there are a plurality of connection manners when the input port and the output port of the optical switching module are respectively connected to the input module and the output module.

Optionally, the optical switching module may be connected to the input module and the output module in a one-to-one connection manner. To be specific, one input port is connected to only one input module, and one output port is connected to only one output module. In this possible implementation, 1:N protection may be implemented for each input module. To be specific, there is one protection path (the second path) between each input module and N output modules. The optical switching module may open a protection path between each input module and the N output modules based on a requirement. The one-to-one connection manner has a simple structure, a small link insertion loss, and is easy to implement.

Optionally, the optical switching module may be connected to the input module and the output module in a one-to-many connection manner. To be specific, one input port is connected to a plurality of input modules, and one output port is connected to a plurality of output modules. This possible implementation has a feature of time-sharing protection. To be specific, only one protection path can work at a same moment when the input module (or the output module) connected to one input port (or one output port). The optical switching module in the one-to-many connection manner may be used to reduce a quantity of input ports and a quantity of output ports in the optical switching module, reduce complexity of the optical switching module, and reduce costs of the optical switching module.

Optionally, the optical switching module may be connected to the input module and the output module in a many-to-one connection manner. To be specific, a plurality of input ports are connected to one input module, and a plurality of output ports are connected to one output module. In this possible implementation, there may be a plurality of protection paths between each input module and each output module, and N:M protection may be implemented. N represents a total quantity of working paths (first paths) between each input module and each output module, and M represents a total quantity of protection paths (second paths) between the input module and the output module. This further improves reliability of the OXC device.

In a possible implementation of the second aspect, the target input module includes a first wavelength selective switch WSS, the first WSS includes a first output interface and a second output interface. The first output interface is connected to the target output module, and the second output interface is connected to the target input port. The switching, via a target input module to a second path for transmission, a service optical signal to be transmitted from the first path if a first path is faulty includes: if the first path is faulty, switching, via the first WSS to the second output interface for output, the service optical signal to be output from the first output interface. The first path is an optical transmission path between the first output interface and the target output module, and the second path is an optical transmission path among the second output interface, the target input port, the target output port, and the target output module.

In this possible implementation, the target input module includes the WSS. The first output interface of the WSS is connected to the target output module, and the second output interface of the WSS is connected to the target input port of the optical switching module. The target output port of the optical switching module is connected to the target output module. If a working path (the first path) between the first output interface of the WSS and the target output module is faulty, the target input module switches an output interface via the WSS, and the WSS inputs the service optical signal to the target input port through the second output interface. The optical switching module controls the service optical signal to be transmitted to the target output module through the target output port. In this possible implementation, when scheduling the service optical signal, the WSS may specify and allocate different transmission paths to optical waves of different wavelengths in the service optical signal. This improves accuracy of scheduling the service optical signal by the target output module.

In a possible implementation of the second aspect, the optical switching module includes an optical switch. The controlling, via the optical switching module, the service optical signal received by the target input port to be transmitted to the target output module through the target output port includes: setting, via the optical switch, the target input port and the target output port to be closed, to control the service optical signal to be transmitted to the target output module through the target output port.

In this possible implementation, it is assumed that the target input module is connected to a target input port of the optical switch, and the target output port is connected to the target output module. If the working path (the first path) between the target input module and the target output module is faulty, the target input module inputs the service optical signal to the target input port. The optical switch controls the service optical signal to be output to the target output module through the target output port by setting the target input port and the target output port to be closed. It may be understood that, if the service optical signal needs to be transmitted to another output module, the optical switch may control a switch between the target input port and another output port to be closed, to schedule the service optical signal. Implementation of the optical switching module by using the optical switch has many advantages. For example, a size of the optical switch is small, so that space that is occupied by the optical switching module and that is in the OXC device is reduced. In addition, an insertion loss generated when an optical signal is transmitted in the optical switch is small, and a failure rate is low. This improves reliability of the OXC device.

In a possible implementation of the second aspect, the optical switching module includes a second WSS. The controlling, via the optical switching module, the service optical signal received by the target input port to be transmitted to the target output module through the target output port includes: adjusting a rotation angle of a liquid crystal on silicon via the second WSS, to control the service optical signal to be transmitted to the target output module through the target output port.

In this possible implementation, it is assumed that the target input module is connected to a target input port of the WSS, and the target output port is connected to the target output module. If the working path (the first path) between the target input module and the target output module is faulty, the target input module inputs the service optical signal to the target input port, and the service optical signal is transmitted to the liquid crystal on silicon after passing through a prism group and a grating. The WSS schedules the service optical signal to the target output port by adjusting the angle of the liquid crystal on silicon, the target output port transmits the service optical signal to the target output module. Implementation of the optical switching module by using the WSS has many advantages. Wavelength-level scheduling between the plurality of input ports and the plurality of output ports may be implemented via a multi-port WSS, and different transmission paths may be specified and allocated to optical waves of different wavelengths in the service optical signal. This improves accuracy of scheduling the service optical signal by the optical switching module.

In a possible implementation of the second aspect, the optical switching module includes an optical splitter. The controlling, via the optical switching module, the service optical signal received by the target input port to be transmitted to the target output module through the target output port includes: adjusting an optical splitting ratio and an optical splitting direction of the service optical signal via the optical splitter, to control the service optical signal to be transmitted to the target output module through the target output port.

In a possible implementation of the second aspect, the optical switching module includes an arrayed waveguide grating AWG. The controlling, via the optical switching module, the service optical signal received by the target input port to be transmitted to the target output module through the target output port includes: adjusting an optical path of the AWG via the AWG, to control the service optical signal to be transmitted to the target output module through the target output port.

In a possible implementation of the second aspect, the optical switching module includes a micro-electro-mechanical system MEMS. The controlling, via the optical switching module, the service optical signal received by the target input port to be transmitted to the target output module through the target output port includes: adjusting an angle of a micromirror in the MEMS via the MEMS, to control the service optical signal to be transmitted to the target output module through the target output port.

In this possible implementation, it is assumed that the target input module is connected to a target input port of the MEMS, and the target output port is connected to the target output module. If the working path (the first path) between the target input module and the target output module is faulty, the target input module inputs the service optical signal to the target input port. The MEMS rotates the angle of the MEMS micromirror through electrical control, to schedule the service optical signal to the target output port, and the target output port transmits the service optical signal to the target output module. Implementation of the optical switching module by using the MEMS has many advantages. An MEMS technology is mature. When there are a large quantity of ports, the MEMS can implement accurate gating between the large quantity of ports. This improves a capability of the optical switching module to schedule the service optical signal.

According to a third aspect, this application provides a communication system. The communication system includes at least an optical cross-connect device, and the optical cross-connect device is the optical cross-connect device according to any one of the first aspect or the possible implementations of the first aspect.

### BRIEF DESCRIPTION OF DRAWINGS

FIG. 1 is a schematic diagram of a structure of a communication system according to this application;
FIG. 2 is a schematic diagram of a structure of an OXC device according to this application;
FIG. 3 is a schematic diagram of a structure of another OXC device according to this application;
FIG. 4 is a schematic diagram of a connection relationship of an optical switching module according to this application;
FIG. 5 is a schematic diagram of another connection relationship of an optical switching module according to this application;
FIG. 6 is a schematic diagram of still another connection relationship of an optical switching module according to this application;
FIG. 7 is a schematic diagram of a structure of still another OXC device according to this application;
FIG. 8 is a schematic diagram of a structure of a planar lightwave circuit PLC optical splitter according to this application;
FIG. 9 is a schematic diagram of a structure of an optical switch according to this application;
FIG. 10 is a schematic diagram of a structure of a WSS according to this application; and
FIG. 11 is a schematic diagram of a structure of an MEMS according to this application.

### DESCRIPTION OF EMBODIMENTS

To make objectives, technical solutions, and advantages of this application clearer and more comprehensible, the following describes embodiments of this application with reference to the accompanying drawings. It is clear that the described embodiments are merely a part rather than all of embodiments of this application. A person of ordinary skill in the art may learn that, with emergence of a new application scenario, the technical solutions provided in embodiments of this application are also applicable to a similar technical problem.

In the specification, claims, and the accompanying drawings of this application, the terms "first", "second", and the like are intended to distinguish between similar objects, but do not necessarily indicate a specific order or sequence. It should be understood that the data termed in such a way is interchangeable in appropriate circumstances, so that embodiments described herein can be implemented in other orders than the order illustrated or described herein. In addition, the terms "include", "have" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effect can be achieved.

Optical cross-connect (optical cross connect, OXC) is a new centralized optical cross-connect device launched in recent two years. The OXC may implement large-dimension service cross-connection in an optical cross-connection manner. This effectively shortens a transmission delay of a service optical signal and improves service processing efficiency.

An OXC device includes a plurality of slots, OXC boards having a same feature or different features are inserted into the plurality of slots, and optical signal interaction may be implemented between different slots via an optical connection device. A slot and the optical connection device may be connected via a high-density optical connector. The optical connector is a multi-core multi-channel optical connector, and may include a plurality of optical fibers. Optical signals are sensitive to dirt and bending when being transmitted in an optical fiber. It is assumed that, after falling into a fiber core area, dust causes losses of optical signals transmitted in a fiber core. In addition, optical signals accumulated on the dust accumulate and generate heat seriously. In this case, the dust burns on an end face of the optical fiber. Consequently, the fiber core is permanently invalid, and transmission of a service optical signal in an optical path of the fiber core is affected. To ensure that the service optical signal in the optical path can be normally transmitted, a backup slot may be reserved in the OXC device, and a backup board is inserted into the backup slot. It is assumed that a service optical signal is transmitted from a board A to a board B, and then is output by the board B to another component. If an optical path from A to B is faulty, the service optical signal output by the board A is transmitted to a backup board C, and then the board C outputs the service optical signal to another component. Service protection is implemented by replacing the board B with the board C.

In a conventional OXC device, a large quantity of backup boards occupy service slots. Consequently, service processing efficiency of the OXC device is low. In addition, a backup board is the same as a working board, and the large quantity of backup boards increase production costs of the OXC device.

To resolve the foregoing problems existing in the current OXC device, this application provides an optical cross-connect OXC device, a communication method, and a communication system. In the OXC device provided in this application, if a first path is faulty, path switching may be directly implemented between working boards in the OXC device, and a backup board does not need to be installed. This reduces production costs of the OXC device. In addition, a working board may be installed in a slot that is occupied by the backup board and that is in the OXC device. This further improves service processing efficiency of the OXC device.

The following separately describes the OXC device, the communication method, and the communication system provided in this application. The communication system provided in this application is first described.

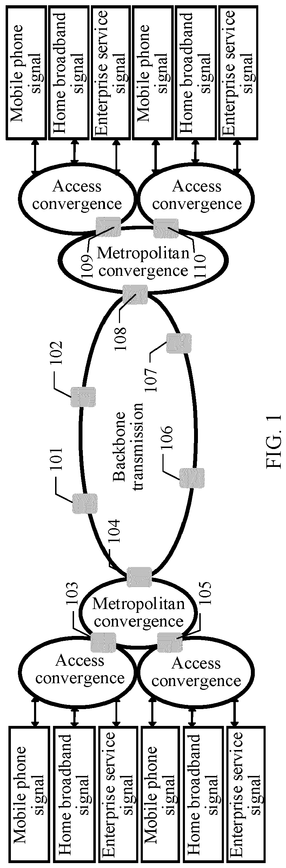

FIG. 1 is a schematic diagram of a structure of a communication system according to this application.

Refer to FIG. 1. For example, it is assumed that, when a city A transmits a signal to a city B, an OXC device at an access convergence layer may converge signals, such as radio signals, home broadband signals, enterprise service signals, and the like that are in a same area in the city A and that need to be transmitted, into a signal C. OXC devices at access convergence layers in a plurality of different areas converge a plurality of collected signals C into a signal D via an OXC device at a metropolitan convergence layer. Then, an OXC device at a backbone transmission layer transmits the signal D to the city B. After receiving the signal D, the city B separates the signal D via the OXC device at the metropolitan convergence layer and the OXC device at the access convergence layer, and transmits a separated signal to a corresponding receiving device.

As shown in FIG. 1, a station 101 to a station 110 are all stations in which an OXC device may be used. The OXC device is mainly used at the metropolitan convergence layer and the backbone transmission layer, and is configured to perform service signal convergence and separation, and multi-dimensional service signal scheduling. The OXC device may further multiplex accessed and converged signals to achieve larger-capacity signal convergence and perform long-distance transmission of a converged signal.

The foregoing example describes the structure of the communication system provided in this application. The following example describes in detail the OXC device provided in this application with reference to the communication system described in the foregoing example.

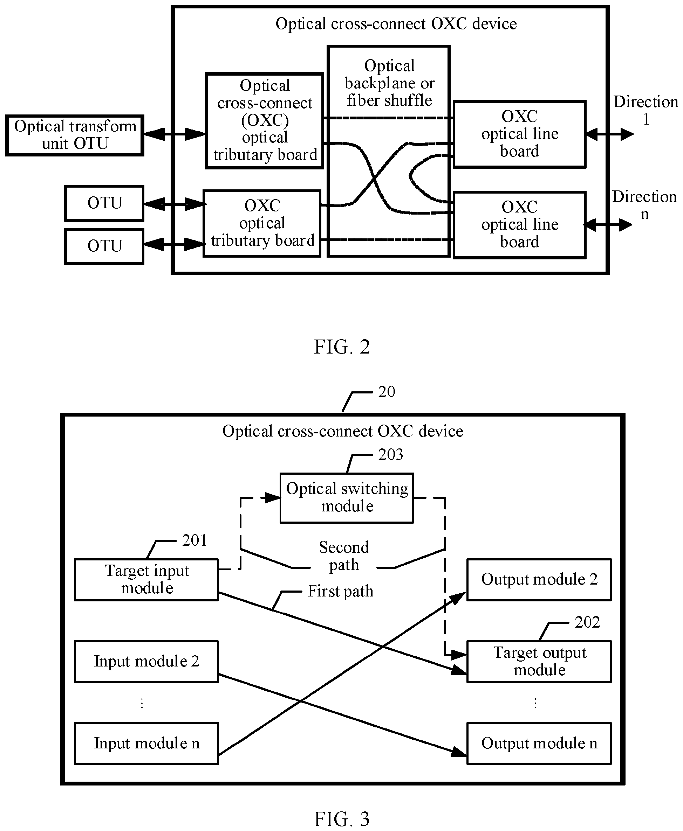

FIG. 2 is a schematic diagram of a structure of an OXC device according to this application.

In this application, the OXC device includes OXC optical tributary boards and OXC optical line boards. An OXC optical tributary board and an OXC optical line board are connected via an optical backplane or a fiber shuffle. The OXC optical tributary board may multiplex received optical signals output by a plurality of optical transform units (optical transform units, OTUs), and transmit multiplexed signals to the OXC optical line board via the optical backplane or the fiber shuffle. The OXC optical line board transmits the multiplexed signals to another device. Alternatively, the OXC optical line board transmits a received optical signal to the OXC optical tributary board via the optical backplane or the fiber shuffle. The OXC optical tributary board demultiplexes the optical signal and outputs demultiplexed optical signals to a plurality of OTUs. In addition, signals may also be transmitted between OXC optical line boards and between OXC optical tributary boards.

In this application, the OXC device may implement multiplexing and demultiplexing of a multi-wavelength OTU signal. The OXC device may further schedule an optical signal to different line directions via the optical backplane or the fiber shuffle, to implement overall multiplexing and scheduling of the optical signal.

Optionally, an input module included in the OXC device provided in this application may be the OXC optical tributary board, or an input module included in the OXC device may be the OXC optical line board. This is not specifically limited herein. Similarly, an output module included in the OXC device provided in this application may be the OXC optical tributary board, or an output module included in the OXC device may be the optical line board of the OXC device. This is not specifically limited herein.

FIG. 3 is a schematic diagram of a structure of another OXC device according to this application.

Refer to FIG. 3. An optical cross-connect device 20 provided in this application includes a plurality of input modules, a plurality of output modules, and an optical switching module. Any one of the plurality of input modules is selected as a target input module 201. Similarly, any one of the plurality of output modules is selected as a target output module 202.

In this application, it is assumed that a service optical signal A needs to be transmitted between the target input module 201 and the target output module 202 through a first path. The first path is an optical transmission path between the target input module 201 and the target output module 202. If the first path is faulty, the target input module 201 may switch, to a second path for transmission, the service optical signal A to be transmitted from the first path. The second path is an optical transmission path among the target input module 201, an optical switching module 203, and the target output module 202.

In this application, when the target input module 201 switches, to the second path for transmission, the service optical signal A to be transmitted from the first path, the target input module 201 may input the service optical signal A to the optical switching module. Therefore, the optical switching module 203 may control the service optical signal A output by the target input module 201 to be transmitted to the target output module 202 through the second path. Then, the target output module 202 may output the service optical signal A.

In this application, the OXC device includes a plurality of slots, boards having different features may be inserted into different slots, and one board may include a plurality of input modules and/or a plurality of output modules. Optical signal connections between different slots depend on an optical connection device. Optionally, the optical connection device may be an optical backplane, a fiber shuffle, or another element. This is not specifically limited herein.

In this application, the OXC device may include a service area and a system area. The system area is mainly responsible for functions such as power supply, main control board communication, interface alarm processing, wavelength scanning, and the like. The system area is a non-service slot area. A layout of components in the system area does not affect insertion of a service board. Optionally, the optical switching module 203 provided in this application may be located in the system area, or may be located in the service area. This is not specifically limited herein.

In the OXC device provided in this application, if the first path is faulty, the target input module may switch, to the second path for transmission, the service optical signal to be transmitted from the first path. In addition, the OXC device further includes the optical switching module. The optical switching module may control the service optical signal that is input from the target input module to be transmitted to the target output module through the second path. Both the first path and the second path are optical transmission paths between the target input module and the target output module. Therefore, if the first path is faulty, path switching may be directly implemented between working boards in the OXC device, and a backup board does not need to be installed. This reduces production costs of the OXC device. In addition, a working board may be installed in a slot that is occupied by the backup board and that is in the OXC device. This further improves service processing efficiency of the OXC device.

In this application, the optical switching module in the OXC device has a plurality of connection manners to the input module and the output module. With reference to the accompanying drawings, the following uses specific examples to describe a connection manner of the optical switching module in this application and a specific process in which the optical switching module schedules an optical signal to the second path for transmission when the first path is faulty.

In this application, the optical switching module 203 includes a plurality of input ports and a plurality of output ports. Each input port is connected to at least one input module, and each output port is connected to at least one output module. A target input port of the optical switching module is connected to the target input module, and a target output port of the optical switching module is connected to the target output module.

There are a plurality of connection manners when the input port and the output port of the optical switching module are respectively connected to the input module and the output module.

### Manner 1: One-to-one connection

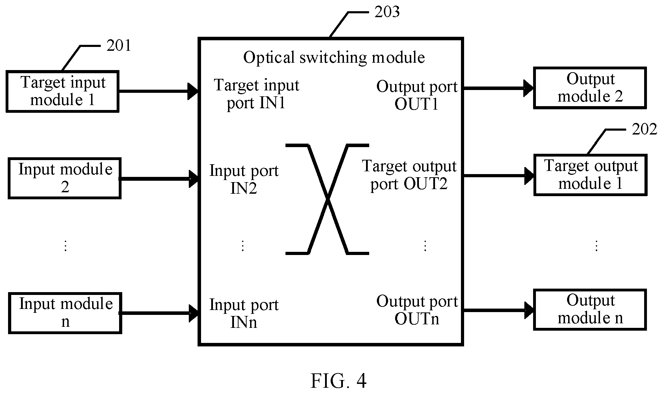

FIG. 4 is a schematic diagram of a connection relationship of an optical switching module according to this application.

Refer to FIG. 4. Optionally, the optical switching module may be connected to an input module and an output module in the one-to-one connection manner. To be specific, one input port is connected to only one input module, and one output port is connected to only one output module. In this possible implementation, 1:N protection may be implemented for each input module. To be specific, there is one protection path (a second path) between each input module and N output modules. The optical switching module may open a protection path between each input module and the N output modules based on a requirement. The one-to-one connection manner has a simple structure, a small link insertion loss, and is easy to implement.

For example, it is assumed that a working path (a first path) is faulty, and a protection path that is between a target input module 201 and a target output module 202 and that corresponds to a working path in the figure is a path between a target input port IN1 and a target output port OUT2. The target input module inputs a service optical signal A to the target input port IN1, and the optical switching module 203 opens the protection path between the target input port IN1 and the target output port OUT2, and controls the service optical signal A to be output from the target output port OUT2 to a target output module 202.

In this connection manner, an OXC device may include one or more input modules, and may include one or more output modules. A quantity of input modules and a quantity of output modules included in the OXC device are not limited herein. Similarly, the optical switching module may include one or more input ports, and may include one or more output ports. A quantity of input ports and a quantity of output ports included in the optical switching module are not limited herein.

### Manner 2: One-to-many connection

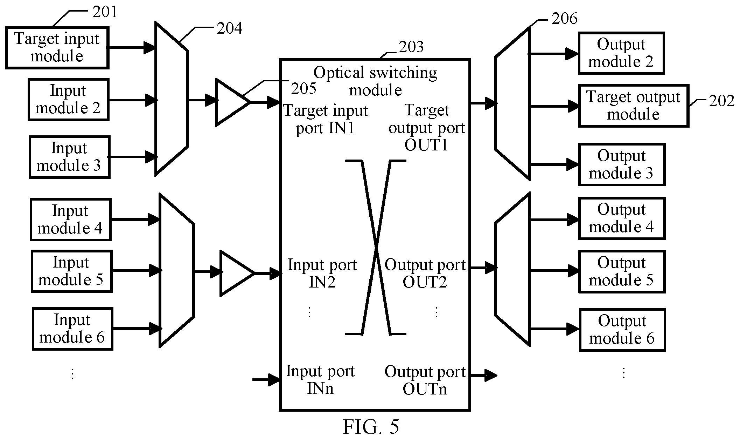

FIG. 5 is a schematic diagram of another connection relationship of an optical switching module according to this application.

Refer to FIG. 5. Optionally, the optical switching module may be connected to an input module and an output module in the one-to-many connection manner. To be specific, one input port is connected to a plurality of input modules, and one output port is connected to a plurality of output modules.

In this possible implementation, in addition to a target input module 201, a target output module 202, and an optical switching module 203, an OXC device may further include a multiplexer 204, an optical amplifier 205, and a demultiplexer 206. The multiplexer 204 multiplexes optical signals output by the plurality of input modules. To compensate for a link insertion loss, the optical amplifier 205 may amplify power of a multiplexed optical signal, and input an amplified optical signal to a corresponding input port. The demultiplexer 206 may demultiplex an optical signal output by an output port and then input a demultiplexed optical signal to each output module.

This possible implementation has a feature of time-sharing protection. To be specific, only one protection path can work at a same moment when the input module (or the output module) is connected to one input port (or one output port). The optical switching module in the one-to-many connection manner may be used to reduce a quantiy of input ports and a quantity of output ports in the optical switching module 203, reduce complexity of the optical switching module, and reduce costs of the optical switching module.

For example, it is assumed that a path connected between the target input module 201 and the target output module 202 via an optical backplane or a fiber shuffle is referred to as a working path 1 (a first path). If the working path 1 is faulty, a protection path corresponding to the working path 1 in the figure is referred to as a protection path 1. The protection path 1 is an optical transmission path among the target input module 201, the optical switching module 203, and the target output module 202. The target input module 201 inputs a service optical signal A to a target input port IN1, and the optical switching module 203 opens a path between the target input port IN1 and a target output port OUT1, and controls the service optical signal A to be output from the target output port OUT1 to the target output module 202. It is assumed that a path connected between an input module 2 and an output module 2 via the optical backplane or the fiber shuffle is referred to as a working path 2. As shown in FIG. 5, a protection path corresponding to the working path 2 is also the protection path 1. If the working path 1 and the working path 2 are faulty at a same moment, and it is assumed that the optical switching module 203 determines, at the moment, that a priority of the working path 1 is higher than a priority of the working path 2, the optical switching module 203 may transmit a to-be-transmitted service optical signal in the working path 2 after completing transmission of a to-be-transmitted service optical signal A in the working path 1.

In this connection manner, the OXC device may include one or more input modules, and may include one or more output modules. A quantity of input modules and a quantity of output modules included in the OXC device are not limited herein. Similarly, the optical switching module may include one or more input ports, and may include one or more output ports. A quantity of input ports and a quantity of output ports included in the optical switching module are not limited herein.

### Manner 3: Many-to-one connection

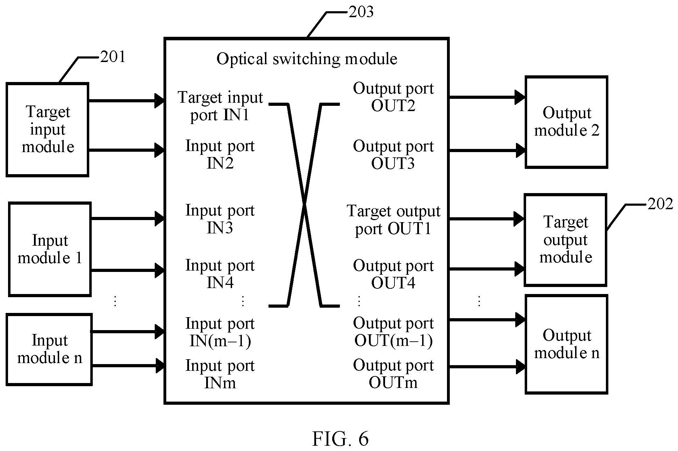

FIG. 6 is a schematic diagram of still another connection relationship of an optical switching module according to this application.

Refer to FIG. 6. Optionally, the optical switching module 203 may be connected to an input module and an output module in the many-to-one connection manner. To be specific, a plurality of input ports are connected to one input module, and a plurality of output ports are connected to one output module.

In this possible implementation, there may be a plurality of protection paths between each input module and each output module, and N:M protection may be implemented. N represents a total quantity of working paths (first paths) between each input module and each output module, and M represents a total quantity of protection paths (second paths) between the input module and the output module. This further improves reliability of an OXC device.

For example, it is assumed that a path connected between the target input module 201 and the target output module 202 via an optical backplane or a fiber shuffle is referred to as a working path 1 (a first path). If the working path 1 is faulty, a protection path corresponding to the working path 1 in the figure is referred to as a protection path 1 (a second path). The protection path 1 is an optical transmission path among the target input module 201, the optical switching module 203, and the target output module 202. In the optical switching module 203, there are four protection paths corresponding to the working path 1. The four protection paths are respectively a path 1 between a target input port IN1 and a target output port OUT1, a path 2 between the target input port IN1 and an output port OUT4, a path 3 between an input port IN2 and the target output port OUT1, and a path 4 between the input port IN2 and the output port OUT4. When the working path 1 is faulty, the OXC device may transmit data through any one of the path 1, the path 2, the path 3, and the path 4. Alternatively, data may be transmitted through another protection path when an original protection path is faulty. For example, if the path 1 is faulty, data to be transmitted from the path 1 may be switched to the path 2, the path 3, or the path 4 for transmission.

The foregoing examples describe the connection manners and a scheduling function of the optical switching module. In this application, the target input module may include a first WSS, and the target input module may schedule the service optical signal via a WSS. A specific implementation is described in detail in the following embodiments.

In this application, optionally, the target input module 201 includes the first WSS, the first WSS includes a first output interface and a second output interface. The first output interface is connected to the target output module 202, and the second output interface is connected to the target input port in the optical switching module 203. If the first path is faulty, the first WSS may switch, to the second output interface for output, the service optical signal to be output from the first output interface. The first path is an optical transmission path between the first output interface and the target output module 202, and the second path is an optical transmission path among the second output interface, the target input port, the target output port, and the target output module.

With reference to the accompanying drawings, the following uses a specific example to describe a process in which the WSS schedules an optical signal to switch a transmission path.

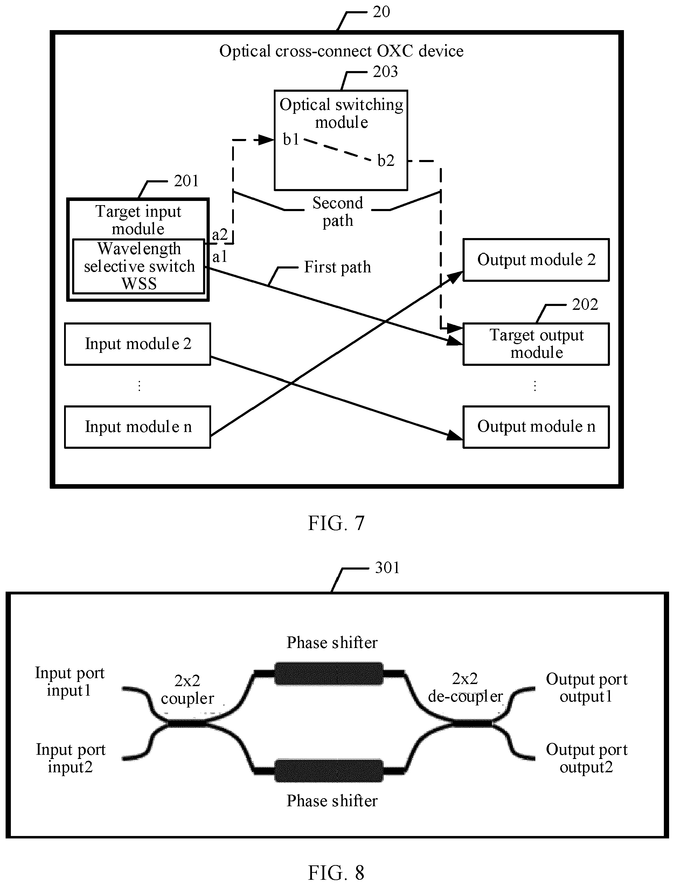

FIG. 7 is a schematic diagram of a structure of still another OXC device according to this application.

Refer to FIG. 7. For example, a target input module includes a WSS. A first output interface a1 of the WSS is connected to a target output module 202, and a second output interface a2 of the WSS is connected to a target input port b1 of an optical switching module. A target output port b2 of the optical switching module 203 is connected to the target output module 202. If a working path 1 (a first path) between the first output interface a1 of the WSS and the target output module 202 is faulty, the target input module 201 switches an output interface via the WSS, and the WSS inputs a service optical signal A to the target input port b1 through the second output interface a2. The optical switching module 203 controls the service optical signal A to be transmitted to the target output module 202 through the target output port b2.

In this application, the WSS is a wavelength selective switch, and can perform path scheduling based on a wavelength level. For example, if 96 wavelengths of optical signals are input to the WSS, the WSS may schedule 10 wavelengths to the output interface a1, and schedule other 10 wavelengths to the output interface a2. When scheduling the service optical signal, the WSS may specify and allocate different transmission paths to optical waves of different wavelengths in the service optical signal. This improves accuracy of scheduling the service optical signal by the target output module.

In this application, optionally, the WSS shown in FIG. 7 is merely an example for description. Optionally, the WSS may include more output interfaces. A quantity of WSS output interfaces is not specifically limited herein.

The foregoing example describes a specific process in which the WSS switches the transmission path. In this application, the optical switching module included in the OXC device has a plurality of specific implementations. The plurality of specific implementations are described in detail in the following examples.

### Manner 1: The optical switching module is an optical switch.

Optionally, the optical switching module provided in this application may be the optical switch. The optical switch may set a target input port and a target output port to be closed, to control a service optical signal to be transmitted to a target output module through the target output port. In this application, optionally, the optical switch may be an optical switch component including a planar lightwave circuit optical splitter (PLC Splitter, PLC) array, or the optical switch may be another type of optical switch component. This is not specifically limited herein.

FIG. 8 is a schematic diagram of a structure of a planar lightwave circuit PLC optical splitter according to this application.

Refer to FIG. 8. After a service optical signal A is input into a PLC 301 from an input port 1 or an input port 2, the optical signal may be controlled to be output from an output port 1, or the service optical signal may be controlled to be output from an output port 2. An N×N-type optical switch may include a switch array including a plurality of PLCs shown in FIG. 8.

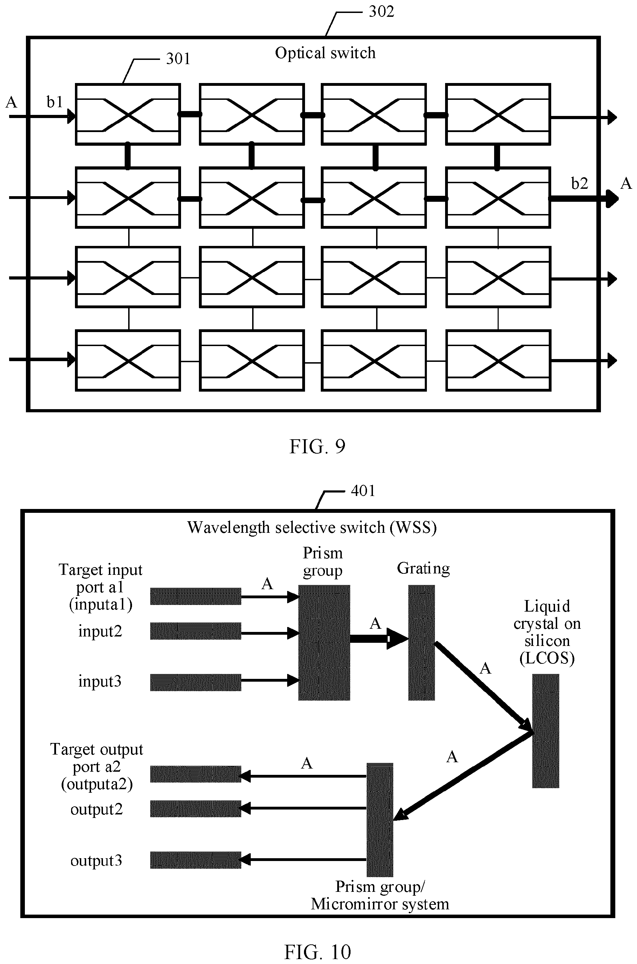

FIG. 9 is a schematic diagram of a structure of an optical switch according to this application.

Refer to FIG. 9. FIG. 9 is a schematic diagram of an optical switch including a PLC array. It is assumed that a target input module is connected to a target input port b1 of the optical switch, and a target output port b2 is connected to the target output module. If a working path (a first path) between the target input module and the target output module is faulty, the target input module inputs the service optical signal A to the target input port a1. The optical switch sets the target input port b1 and the target output port b2 to be closed, to control the service optical signal A to be output to the target output module through the target output port b2. It may be understood that, if the service optical signal A needs to be transmitted to another output module, the optical switch may control a switch between the target input port b1 and another output port to be closed, to schedule the service optical signal.

In this application, implementation of the optical switching module by using the optical switch has many advantages. For example, a size of the optical switch is small, so that space that is occupied by the optical switching module and that is in the OXC device is reduced. In addition, an insertion loss generated when an optical signal is transmitted in the optical switch is small, and a failure rate is low. This improves reliability of the OXC device.

In this application, the optical switch shown in FIG. 9 is merely an example for description. Optionally, compared with FIG. 9, the optical switch may include more PLCs, or the optical switch may include fewer PLCs. This is not specifically limited herein.

### Manner 2: The optical switching module is a WSS.

Optionally, the optical switching module provided in this application may be a second WSS, and the second WSS may adjust a rotation angle of a liquid crystal on silicon to control a service optical signal to be transmitted to a target output module through a target output port.

FIG. 10 is a schematic diagram of a structure of a WSS according to this application.

Refer to FIG. 10. For example, it is assumed that a target input module is connected to a target input port a1 of the WSS, and a target output port a2 is connected to the target output module. If a working path (a first path) between the target input module and the target output module is faulty, the target input module inputs a service optical signal A to the target input port a1, and the service optical signal A is transmitted to a liquid crystal on silicon after passing through a prism group and a grating. The WSS adjusts an angle of the liquid crystal on silicon, to schedule the service optical signal A to the target output port a2, and the target output port a2 transmits the service optical signal A to the target output module.

In this application, implementation of the optical switching module by using the WSS has many advantages. Wavelength-level scheduling between a plurality of input ports and a plurality of output ports may be implemented via a multi-port WSS, and different transmission paths may be specified and allocated to optical waves of different wavelengths in the service optical signal. This improves accuracy of scheduling the service optical signal by the optical switching module.

In this application, the WSS shown in FIG. 10 is merely an example for description. Optionally, compared with FIG. 10, the WSS may include more input ports and output ports, or the WSS may include fewer input ports and output ports. This is not specifically limited herein.

### Manner 3: The optical switching module is an MEMS.

Optionally, the optical switching module provided in this application may be an MEMS, and is configured to adjust an angle of a micromirror in the MEMS, to control a service optical signal to be transmitted to a target output module through a target output port.

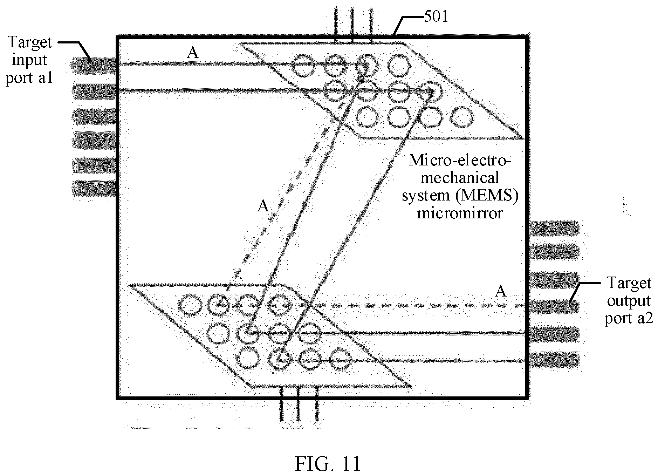

FIG. 11 is a schematic diagram of a structure of an MEMS according to this application.

Refer to FIG. 11. For example, it is assumed that a target input module is connected to a target input port a1 of the MEMS, and a target output port a2 is connected to the target output module. If a working path (a first path) between the target input module and the target output module is faulty, the target input module inputs a service optical signal A to the target input port a1. The MEMS rotates an angle of an MEMS micromirror through electrical control, to schedule the service optical signal A to the target output port a2, and the target output port a2 transmits the service optical signal A to the target output module.

In this application, implementation of the optical switching module by using the MEMS has many advantages. An MEMS technology is mature. When there are a large quantity of ports, the MEMS can implement accurate gating between the large quantity of ports. This improves a capability of the optical switching module to schedule the service optical signal.

In this application, the MEMS shown in FIG. 11 is merely an example for description. Optionally, compared with FIG. 10, the WSS may include more input ports, MEMS micromirrors, and output ports, or the WSS may include fewer input ports, MEMS micromirrors, and output ports. This is not specifically limited herein.

### Manner 4: The optical switching module is an optical splitter.

In this application, the optical splitter may adjust an optical splitting ratio and an optical splitting direction of a service optical signal, to control the service optical signal to be transmitted to a target output module through a target output port.

### Manner 5: The optical switching module is an AWG.

In this application, the AWG may adjust an optical path of the AWG, to control a service optical signal to be transmitted to a target output module through a target output port.

The foregoing examples completely describe the OXC device provided in this application. In the OXC device provided in this application, if the first path is faulty, the target input module may switch, to the second path for transmission, the service optical signal to be transmitted from the first path. The OXC device further includes the optical switching module. The optical switching module may control the service optical signal that is input from the target input module to be transmitted to the target output module through the second path. Both the first path and the second path are optical transmission paths between the target input module and the target output module. Therefore, if the first path is faulty, path switching may be directly implemented between working boards in the OXC device, and a backup board does not need to be installed. This reduces production costs of the OXC device. In addition, a working board may be installed in a slot that is occupied by the backup board and that is in the OXC device. This further improves service processing efficiency of the OXC device.

For the communication method provided in this application, refer to the OXC device provided in the foregoing examples for understanding. A specific implementation and beneficial effects are similar to those of the OXC device shown in the foregoing example. Details are not described herein again.

The foregoing describes in detail the OXC device, the communication method, and the communication system provided in this application. Specific examples are used in this specification to describe principles and implementations of this application. The foregoing embodiments are merely used to help understand the method and the core idea of this application. In addition, a person of ordinary skill in the art may make modifications to the specific implementations and the application scope according to the idea of this application. In conclusion, the content of this specification shall not be construed as a limitation on this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An optical cross-connect device, wherein the optical cross-connect device comprises a plurality of input modules, a plurality of output modules, and an optical switching module;
a target input module is configured to: if a first path is faulty, switch, to a second path for transmission, a service optical signal to be transmitted from the first path, wherein the first path is an optical transmission path between the target input module and a target output module, the second path is an optical transmission path among the target input module, the optical switching module, and the target output module, the plurality of input modules comprise the target input module, and the plurality of output modules comprise the target output module;
the optical switching module is configured to control the service optical signal that is input from the target input module to be transmitted to the target output module through the second path; and
the target output module is configured to output the service optical signal.

2. The optical cross-connect device according to claim 1, wherein
the optical switching module comprises a plurality of input ports and a plurality of output ports, each input port is connected to at least one input module, each output port is connected to at least one output module, a target input port of the optical switching module is connected to the target input module, and a target output port of the optical switching module is connected to the target output module; and
the optical switching module is configured to control the service optical signal received by the target input port to be transmitted to the target output module through the target output port, wherein the second path is an optical transmission path among the target input module, the target input port, the target output port, and the target output module.

3. The optical cross-connect device according to claim 2, wherein
the target input module comprises a first wavelength selective switch WSS, the first WSS comprises a first output interface and a second output interface, the first output interface is connected to the target output module, and the second output interface is connected to the target input port; and
the first WSS is configured to: if the first path is faulty, switch, to the second output interface for output, the service optical signal to be output from the first output interface, wherein the first path is an optical transmission path between the first output interface and the target output module, and the second path is an optical transmission path among the second output interface, the target input port, the target output port, and the target output module.

4. The optical cross-connect device according to claim 3, wherein the optical switching module comprises an optical switch; and
the optical switch is configured to set the target input port and the target output port to be closed, to control the service optical signal to be transmitted to the target output module through the target output port.

5. The optical cross-connect device according to claim 3, wherein the optical switching module comprises a second WSS; and
the second WSS is configured to adjust a rotation angle of a liquid crystal on silicon, to control the service optical signal to be transmitted to the target output module through the target output port.

6. The optical cross-connect device according to claim 3, wherein the optical switching module comprises an optical splitter; and
the optical splitter is configured to adjust an optical splitting ratio and an optical splitting direction of the service optical signal, to control the service optical signal to be transmitted to the target output module through the target output port.

7. The optical cross-connect device according to claim 3, wherein the optical switching module comprises an arrayed waveguide grating AWG; and
the AWG is configured to adjust an optical path of the AWG, to control the service optical signal to be transmitted to the target output module through the target output port.

8. The optical cross-connect device according to claim 3, wherein the optical switching module comprises a micro-electro-mechanical system MEMS; and
the MEMS is configured to adjust an angle of a micromirror in the MEMS, to control the service optical signal to be transmitted to the target output module through the target output port.

9. A communication method, applied to an optical cross-connect device, wherein the optical cross-connect device comprises a plurality of input modules, a plurality of output modules, and an optical switching module, and the method comprises:
switching, via a target input module to a second path for transmission, a service optical signal to be transmitted from the first path if a first path is faulty, wherein the first path is an optical transmission path between the target input module and a target output module, the second path is an optical transmission path among the target input module, the optical switching module, and the target output module, the plurality of input modules comprise the target input module, and the plurality of output modules comprise the target output module;
controlling, via the optical switching module, the service optical signal that is input from the target input module to be transmitted to the target output module through the second path; and
outputting the service optical signal via the target output module.

10. The communication method according to claim 9, wherein
the optical switching module comprises a plurality of input ports and a plurality of output ports, each input port is connected to at least one input module, each output port is connected to at least one output module, a target input port of the optical switching module is connected to the target input module, and a target output port of the optical switching module is connected to the target output module; and
the controlling, via the optical switching module, the service optical signal that is input from the target input module to be transmitted to the target output module through the second path comprises:
controlling, via the optical switching module, the service optical signal received by the target input port to be transmitted to the target output module through the target output port, wherein the second path is an optical transmission path among the target input module, the target input port, the target output port, and the target output module.

11. The communication method according to claim 10, wherein
the target input module comprises a first wavelength selective switch WSS, the first WSS comprises a first output interface and a second output interface, the first output interface is connected to the target output module, and the second output interface is connected to the target input port; and
the switching, via a target input module to a second path for transmission, a service optical signal to be transmitted from the first path if a first path is faulty comprises:
if the first path is faulty, switching, via the first WSS to the second output interface for output, the service optical signal to be output from the first output interface, wherein the first path is an optical transmission path between the first output interface and the target output module, and the second path is an optical transmission path among the second output interface, the target input port, the target output port, and the target output module.

12. The communication method according to claim 11, wherein the optical switching module comprises an optical switch; and
the controlling, via the optical switching module, the service optical signal received by the target input port to be transmitted to the target output module through the target output port comprises:
setting, via the optical switch, the target input port and the target output port to be closed, to control the service optical signal to be transmitted to the target output module through the target output port.

13. The communication method according to claim 11, wherein the optical switching module comprises a second WSS; and
the controlling, via the optical switching module, the service optical signal received by the target input port to be transmitted to the target output module through the target output port comprises:
adjusting a rotation angle of a liquid crystal on silicon via the second WSS, to control the service optical signal to be transmitted to the target output module through the target output port.

14. The communication method according to claim 11, wherein the optical switching module comprises an optical splitter; and
the controlling, via the optical switching module, the service optical signal received by the target input port to be transmitted to the target output module through the target output port comprises:
adjusting an optical splitting ratio and an optical splitting direction of the service optical signal via the optical splitter, to control the service optical signal to be transmitted to the target output module through the target output port.

15. The communication method according to claim 11, wherein the optical switching module comprises an arrayed waveguide grating AWG; and
the controlling, via the optical switching module, the service optical signal received by the target input port to be transmitted to the target output module through the target output port comprises:
adjusting an optical path of the AWG via the AWG, to control the service optical signal to be transmitted to the target output module through the target output port.

16. The communication method according to claim 11, wherein the optical switching module comprises a micro-electro-mechanical system MEMS; and
the controlling, via the optical switching module, the service optical signal received by the target input port to be transmitted to the target output module through the target output port comprises:
adjusting an angle of a micromirror in the MEMS via the MEMS, to control the service optical signal to be transmitted to the target output module through the target output port.

17. A communication system, wherein the communication system comprises at least an optical cross-connect device; and
the optical cross-connect device is the optical cross-connect device according to any one of claims 1 to 8.
